# EUROPÄISCHE PATENTSCHRIFT

(11) **EP 1 388 138 B1**
(45) Veröffentlichungstag und Bekanntmachung des Hinweises auf die Patenterteilung: **15.07.2009**
(21) Anmeldenummer: 02769135.1
(22) Anmeldetag: 03.05.2002
(51) Int. Cl.: G06Q 20/00, G07F 19/00

(54) **VERFAHREN UND ANORDNUNG ZUM BEZAHLEN VON ÜBER EIN DATENNETZ ABRUFBAREN DATENANGEBOTEN**
METHOD AND ARRANGEMENT FOR PAYING DATA ACCESSIBLE ON A DATA NETWORK
PROCEDE ET DISPOSITIF DE PAIEMENT DE DONNEES POUVANT ETRE APPELEES PAR L'INTERMEDIAIRE D'UN RESEAU DE DONNEES

(30) Priorität: 04.05.2001 DE 10121726
(43) Veröffentlichungstag der Anmeldung: 11.02.2004
(73) Patentinhaber: Giesecke & Devrient GmbH, 81677 München (DE)
(72) Erfinder: GRÜNZIG, Stefan, 85402 Kranzberg (DE); STANGLMEIER, Wolfgang, 51143 Köln (DE)
(74) Vertreter: Metzler, Volker
(86) Internationale Anmeldenummer: PCT/EP2002/004890
(87) Internationale Veröffentlichungsnummer: WO 2002/091321

(56) Entgegenhaltungen:
- EP-A- 0 987 642
- WO-A-00/57328
- WO-A-99/27475
- WO-A-99/56254
- YEN S-M: "PayFair: a prepaid internet micropayment scheme ensuring customer fairness" IEE PROCEEDINGS E. COMPUTERS & DIGITAL TECHNIQUES, INSTITUTION OF ELECTRICAL ENGINEERS. STEVENAGE, GB, Bd. 148, Nr. 6, 22. November 2001 (2001-11-22), Seiten 207-213, XP006017611 ISSN: 1350-2387
- HENKEL J: "BEZAHLEN AUF DRAHT E-PAYMENT: WIE DER RUBEL INS ROLLEN KOMMT" CT MAGAZIN FUER COMPUTER TECHNIK, VERLAG HEINZ HEISE GMBH., HANNOVER, DE, Nr. 6, 12. März 2001 (2001-03-12), Seiten 270-272,274,276-278,280-281, XP001001885 ISSN: 0724-8679

## Beschreibung

Die Erfindung geht aus von einem Verfahren nach der Gattung des unabhängigen Anspruchs 1. Ein Verfahren dieser Art wird von der Deutschen Post zum Frankieren von Briefen eingesetzt (www.DeutschePost.de /Stampit). Dabei wird in einem speziell gesicherten Bereich des Internets eine Portokasse eingerichtet, die als virtueller Briefmarkenvorrat dient. Die Portokasse kann an speziellen Ladeeinrichtungen jederzeit bis zu einem vorgegebenen Höchstbetrag aufgeladen werden. Um die virtuellen Briefmarken zum Frankieren nutzen zu können, ist desweiteren eine Frankiersoftware erforderlich, die auf den Heimcomputer des Nutzers geladen wird. Durch die Frankiersoftware und durch die Begrenzung des in die Portokasse ladbaren Betrages bietet dieses Verfahren eine gute Sicherheit. Allerdings ist es nur für vorbestimmte Anwendungen, insbesondere zum Frankieren nutzbar. Als generelles Zahlungsmittel zur Zahlung von beliebigen, über ein Datennetz abrufbaren Leistungen eignet es sich nicht.

Ein zur Zahlung beliebiger, über ein Datennetz abrufbarer Datenangebote ist unter dem Namen "Frist-Gate Klick and Buy" bekannt geworden. Ein Nutzer, der ein gebührenbehaftetes Datenangebot abrufen möchte, wird bei diesem Verfahren vor Auslieferung eines abgerufenen Datenangebotes zunächst auf eine Zahlungszentrale umgeleitet. Bei dieser muß er der Zahlung des aufgerufenen Datenangebotes zustimmen. Ist das erfolgt, erhält er eine geheime URL, die er nun an den Leistungsanbieter weiterleiten kann, um das gewünschte Datenangebot geliefert zu bekommen. Dieses bekannte Verfahren bietet für den Nutzer gleichfalls eine akzeptable Sicherheit. Eine bequeme Nutzung, insbesondere ohne Wartezeiten, setzt allerdings eine sehr schnelle Ausführung der Schritte zur Zahlungsbestätigung und zur Lieferung der geheimen URL-Adresse voraus. Zudem erfordert jeder Zahlungsvorgang die Einrichtung einer Verbindung zwischen der Datenverarbeitungsanlage des Leistungsanbieters und der Zahlungszentrale. Einrichtung und Betrieb dieser Verbindung sind zeitaufwendig und in der Regel mit Kosten verbunden.

Aus der WO 00/57328 ist ein System zur Durchführung von elektronischen Zahlungen unter Verwendung von frei skalierbarem elektronischem Geld in Form von elektronischen Berechtigungsscheinen (Scrip) bekannt, das ggf. auch eine Rückerstattung von elektronischem Geld an einen Nutzer erlaubt. Für die Durchführung einer Zahlung erwirbt ein Nutzer zunächst händlerbezogene "Vendor-Scrips". Dies kann direkt bei einem Diensteanbieter geschehen, in welchem Fall bei dem Diensteanbieter ein Nutzerkonto eingerichtet wird, das es erlaubt, einen Nutzer zu identifizieren. Die erworbenen "Vendor-Scrips" werden auf das Computersystem des Nutzers übertragen und dort in einer elektronischen Geldbörse verwaltet. Mittels der "Vendor Scrips" kann der Nutzer anschließend Waren oder Dienstleistungen von dem Diensteanbieter beziehen und elektronisch bezahlen. Ist der Wert eines "Vendor-Scrips" größer als der Wert einer zu bezahlenden Ware, kann der Diensteanbieter dem Nutzer Wechsel-"Vendor-Scrips" zurück übermitteln. Während ihres Lebenszyklusses werden die "Vendor Scrips" mit Identifikatoren versehen, die es gestatten, ggf. eine Rückerstattung vorzunehmen. Das bekannte System ermöglicht ein weitgehend anonymisiertes elektronisches Bezahlen mittels einer Art elektronischen Ersatzgeldes, wobei das System zugleich sicher gegen Betrugsversuche ist, indem es ggf. eine Rückverfolgung von elektronischen Zahlungen erlaubt. Das System ist jedoch vergleichsweise aufwendig, da es insbesondere vom Nutzer den Betrieb eines Computersystems zur Realisierung einer Geldbörse erfordert.

Aus der WO 99/56254 A ist weiterhin ein auf im voraus bezahlten Gutscheinen basierendes System zur Durchführung von elektronischen Zahlungen bei der Nutzung von Datenangeboten bekannt. Der Nutzer erwirbt dabei von einer Bank Gutscheine, gegen deren Vorlage später bei einem Anbieter von Datenangeboten ein Guthaben angelegt werden kann. Sollte bei der Zahlung eines Datenangebotes ein Guthaben nicht ausreichend sein, wird automatisch ein Prozeß zur Durchführung einer erneuten Vorauszahlung gestartet. Das Einlösen der Gutscheine erfolgt mit Hilfe von Identifikationsnummern, die vom Nutzer verwaltet und bei einer Bezahlung präsentiert werden müssen. Die dadurch dem Nutzer auferlegte Verpflichtung zur Verwaltung der Gutscheine beeinträchtigt die Nutzerfreundlichkeit des Systems.

Aus der EP 987 642 A ist weiterhin ein elektronisches Zahlungssystem bekannt, das die Verwendung vorausbezahlter Tokens gestattet. Die Token werden in einer auf dem PC eines Nutzers eingerichteten elektronischen Börse verwaltet. Das System unterstützt insbesondere die Bekanntmachung von Markennamen. Es erfordert die Einrichtung einer elektronischen Börse auf dem PC des Nutzers und ist insofern aufwendig.

Der Erfindung liegt die Aufgabe zugrunde, ein Verfahren zum Bezahlen von über ein Datennetz abrufbaren Datenangeboten anzugeben, das bei begrenztem Risiko für einen Nutzer einfach handhabbar ist.

Diese Aufgabe wird gelöst durch ein Verfahren gemäß dem unabhängigen Anspruch 1 sowie Anordnungen gemäß den unabhängigen Ansprüchen 19 und 24.

Das erfindungsgemäße Verfahren hat den Vorteil, daß es zum überwiegenden Teil nur zwischen dem Nutzer und der Datenverarbeitungsanlage des Leistungsanbieters ausgeführt wird.

Zahlungen erfolgen mittels elektronischer Werteinheiten, die aus Wertblökken herausgetrennt werden. Die Zahl der in einem Wertblock enthaltenen elektronischen Werteinheiten und damit die Größe der Wertblöcke sind von einem Nutzer frei festlegbar. Zur Erzeugung der Wertblöcke ist grundsätzlich nur einmalig, höchstens aber gelegentlich die Herstellung einer Verbindung zwischen dem Nutzer und einer Zahlungszentrale erforderlich. Ebenso genügt zur Abrechnung benutzter Wertblöcke grundsätzlich ein einmaliger, allenfalls aber ein gelegentlicher Verbindungsaufbau zwischen der Datenverarbeitungsanlage des Leistüngsanbieters und einer Zahlungszentrale. Kostenträchtige Verbindungen zu Zahlungszentralen müssen somit nur in stark vermindertem Umfang hergestellt werden.

Ein Vorteil des erfindungsgemäßen Verfahrens besteht darin, daß in der Datenverarbeitungsanlage des Leistungsanbieters nur Doppel von bei einer Zahlungszentrale erzeugten Wertblöcken bearbeitet werden. Mittels der Wertblockdoppel läßt sich in einfacher Weise die Berechtigung zur Abrechnung von Wertblöcken verifizieren. Die Wertblockdoppel werden zudem nur bis zum Eintritt eines vorbestimmten Ereignisses ,vorzugsweise für eine begrenzte Zeit gehalten.

Einen besonderen Vorteil des vorgeschlagenen Verfahrens bildet die doppelte Beschränkung des Risikos durch die zeitlich befristete Bereithaltung der Wertblöcke zum einen und durch die Begrenzung des auf das Nutzerkonto einzahlbaren Betrages zum anderen. Eine weitere Risikokontrolle ergibt sich dadurch, daß die Größe der Wertblöcke von den Nutzern selbst bestimmbar ist. Nach Festsetzung des an einen Anbieter für in Anspruch genommene Leistungen abzuführenden Gesamtbetrages werden die Wertblöcke zudem ungültig gemacht.

Ein weiterer Vorteil des erfindungsgemäßen Verfahrens besteht darin, daß es leicht in bestehende Netzarchitekturen integrierbar ist. Neuartige Verbindungen oder neuartige Netzstrukturen müssen nicht geschaffen werden. Das Verfahren eignet sich vorteilhafterweise auch zur Nutzung in Mobiltelefonnetzen.

Das erfindungsgemäße Verfahren eignet sich besonders zur Abwicklung von Kleinstzahlungen, etwa zum seitenweisen Bezahlen von über das Internet abrufbaren Dateiinhalten. In einer praktischen Anwendung erstellt ein Nutzer dabei beim ersten Zugriff auf ein gebührenbehaftetes Datenangebot eines Leistungsanbieters jeweils einen anbieterbezogenen Scheck mit einer von ihm bestimmten Anzahl von Werteinheiten. Die dazu erforderliche Verbindung zu einer Zahlungszentrale wird von seinem Internet-Browser automatisch eingerichtet. Anschließend kann er nach Belieben gebührenpflichtige Datenangebote solcher Leistungsanbieter abrufen, für die der Nutzer Schecks erstellt hat. Dabei wird ihm jeweils die Gebühr für ein Datenangebot angezeigt, die Entnahme von Werteinheiten aus dem Scheck erfolgt danach automatisch durch die Netz-Datenverarbeitungsanlage. Ist ein Scheck verbraucht, wird er aufgefordert einen neuen zu erstellen.

Eine Netz-Datenverarbeitungsanlage gemäß dem unabhängigen Anspruch 21 ermöglicht in vorteilhafter Weise die Durchführung eines Verfahrens gemäß dem unabhängigen Anspruch 1. Die Anlage hat den Vorteil, daß sie leicht in bestehende Netzstrukturen integriert werden kann.

Ein Ausführungsbeispiel der Erfindung wird nachfolgend unter Bezugnahme auf die Zeichnung näher erläutert. Darin zeigen:
- Fig. 1: die Struktur eines Systems zur Ausführung des vorge- schlagenen Verfahrens,
- Fig. 2: die allgemiene Nutzung des Systems,
- Fig. 3: die Erzeugung eines Wertblocks durch einen Nutzer,
- Fig. 4: den Betrieb eines Systems, in dem Nutzer- oder Anbie- terkonten von externen Kontenbetreibern geführt wer- den,
- Fig. 5: eine Realisierung des Systems unter Verwendung des Internets.

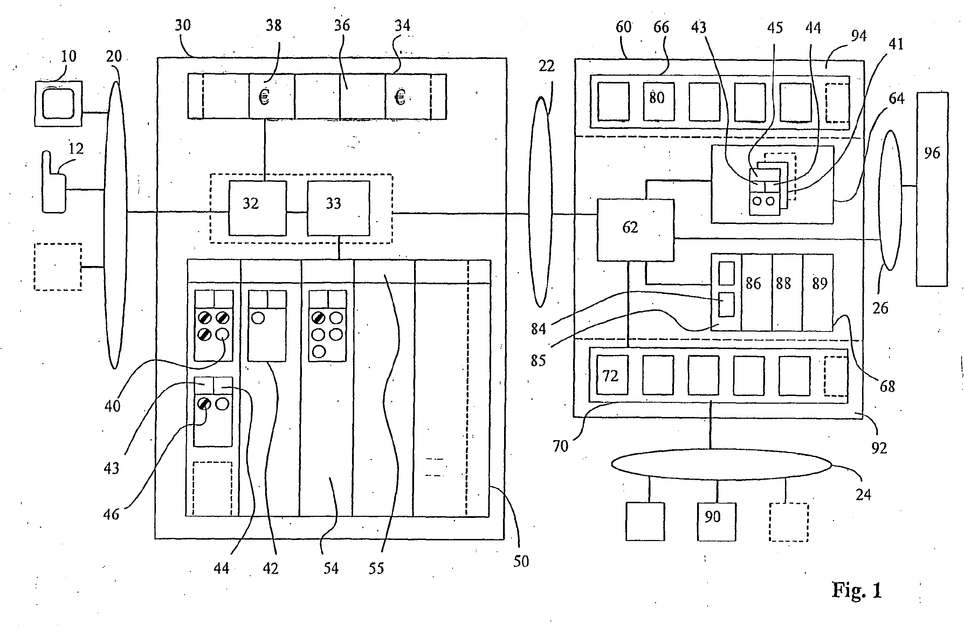

Fig. 1 zeigt die Struktur eines zur Durchführung des vorgeschlagenen Verfahrens geeigneten Transaktionssystems. Seine grundlegenden Elemente sind ein oder mehrere Nutzerschnittstellen 10, 12, die über ein Datennetz 20 mit der Netz-Datenverarbeitungsanlage 30 verbunden sind, auf welcher ein oder mehrere Leistungsanbieter abrufbare Datenangebote 36, 38 anbieten. Die Netz-Datenverarbeitungsanlage 30 ist ihrerseits über ein weiteres Datennetz 22 mit einer Zahlungszentrale 60 verbunden, welche einen Nutzerkontenbereich 70 aufweiset, der wiederum über ein nachgeordnetes Datennetz 24 mit Ladeeinrichtungen 90 verbunden ist. Die Zahlungszentrale 60 ist ferner über ein weiteres Datennetz 26 an ein Hintergrundsystem 96 zur Ausführung von Zahlungen angeschlossen.

Unter Nutzerschnittstelle 10, 12 wird jede Art von bekannten Transaktionsendgeräten verstanden, die es einem Nutzer erlaubt, durch eine interaktive Kommunikation Transaktionen auf einer über ein Datennetz 20 zugeschalteten Datenverarbeitungsanlage 30 zu bewirken. Hierzu besitzen die Nutzerschnittstellen 10,12 Wiedergabemittel, z.B. in Gestalt einer Bildanzeige, zur Darstellung von an die Nutzerschnittstelle 10,12 übertragenen Informationen der nachgeschalteten Datenverarbeitungsanlage 30, Eingabemittel, z.B. in Gestalt eines Tastenfeldes, die es dem Nutzer ermöglichen, Informationen für eine nachgeschaltete Netz-Datenverarbeitungsanlage 30 zu erzeugen, sowie eine bidirektionale Schnittstelle zu mindestens einem Datennetz 20, welches zur Herstellung einer Verbindung mit einer Netz-Datenverarbeitungsanlage 30 geeignet ist. Gängige Ausführungsformen für die Nutzerschnittstellen 10, 12 sind die eines Heimcomputers, eines Handy's oder eines öffentlich zugänglichen Netzterminals, wie sie etwa in Internet-Cafes eingesetzt werden. An das Datennetz 20 kann eine Vielzahl von Nutzern über unterschiedliche Schnittstellen 10, 12 angeschlossen sein und gleichzeitig in Kommunikationsverbindung mit einer Netz-Datenverarbeitungsanlage 30 stehen. Die Nutzerschnittstellen 10,12 reagieren, sofern möglich, selbsttätig, d.h. ohne Einschaltung der Person des Nutzers auf über das Datennetz 20 eingehende Datenbotschaften; beispielsweise stellen sie bei Eingang einer entsprechenden Aufforderung von einem ersten Netzteilnehmer selbsttätig eine Verbindung zu einem in der Aufforderung bezeichneten anderen Netzteilnehmer her. Da sie ihre Funktion dennoch generell nur unter der Einwirkung der Person des Nutzers entfalten, werden die Nutzerschnittstellen 10, 12 im folgenden der Einfachheit halber mit dem Nutzer gleichgesetzt und als Nutzer 10,12 bezeichnet.

Bei dem Datennetz 20 handelt es sich vorzugsweise um das Internet; allgemein kommt daneben aber auch jede andere Netzstruktur in Betracht, die geeignet ist, eine Daten- oder Kommunikationsverbindung zwischen einer oder einer Mehrzahl von Netz-Datenverarbeitungsanlagen 30 und einer Vielzahl von Nutzern 10, 12 herzustellen. Das Datennetz 20 kann insbesondere auch aus einer Zusammenschaltung von mehreren, physikalisch unterschiedlich ausgebildeten Netzen bestehen, beispielsweise kann die Anbindung von Nutzerschnittstellen 12 in Gestalt von Handys über ein Mobilfunknetz erfolgen, das über den Netzbetreiber mit einem Festnetz verknüpft ist.

Die Netz-Datenverarbeitungsanlage 30 hat üblicherweise die Gestalt eines Computers mit großer Leistungsfähigkeit, auf dem unter der Kontrolle eines Anlagenbetreibers in Softwareform Dienste und Datenangebote 36, 38 bereitgestellt sind, auf die Nutzer 10, 12 von außen über das Datennetz 20 zugreifen können. Technisch kann die Netz-Datenverarbeitungsanlage 30 auch durch einen vernetzten Computerverbund realisiert sein, der sich logisch wie ein einzelner Netzteilnehmer verhält. Physisch ist sie nur für den Betreiber der Anlage oder besonders autorisierte Personen zugänglich. Zur sprachlichen Vereinfachung wird die Netz-Datenverarbeitungsanlage 30 nachfolgend als Netzserver bezeichnet.

Wesentliche strukturelle Elemente des Netzservers 30 sind eine zentrale Prozessoreinheit 32, welche mit einem Datenspeicher 34 verbunden ist, sowie ein Kontomodul 33, dem ein gesonderter Speicher 50 zugeordnet ist. Die zentrale Prozessoreinheit 32 realisiert und überwacht in bekannter Weise sämtliche internen Funktionen des Netzservers 30 und steuert den Datenaustausch mit den Nutzern 10, 12 über das Datennetz 20.

In dem Speicher 34 sind dauerhaft die für einen Zugriff durch Nutzer 10,12 bereitstehenden Datenangebote 36, 38 eines oder mehrerer Leistungsanbieter angelegt. Unter Datenangebot 36, 38 wird dabei jegliche Art von in Daten darstellbaren Leistungen verstanden, insbesondere Programme und Informationen. Leistungsanbieter können beliebige Institutionen wie kommerzielle Internetportale, Softwarehäuser, Datenbankanbieter oder Einzelpersonen sein. Der Speicher 34 ist hierzu in eine der Zahl der Datenangebote 36, 38 entsprechende Zahl von Bereichen gegliedert. Die Datenangebote 36, 38 können kostenlos oder gebührenbehaftet zugänglich sein. Die gebührenbehafteten Datenangebote 38 sind zur Verdeutlichung mit einer besonderen Kennzeichnung versehen, die in Fig. 1 durch das Eurozeichen □ angedeutet wurde.

Die Durchführung der Bezahlvorgänge beim Abruf gebührenbehafteter Datenangebote 38 erfolgt durch das Kontomodul 33. Es ist hierzu zum einen mit der zentralen Prozessoreinheit 32 des Netzservers 30 verbunden. Zum anderen ist es an das Datennetz 22 angeschlossen und steuert darüber den Datenaustausch mit der nachgeschalteten Zahlungszentrale 60. Das Kontomodul 33 kann physisch als eigenständige, nachrüstbare Einheit ausgeführt sein; es kann andererseits auch in Softwareform vorliegen und, wie durch gestrichelte Linie angedeutet, ganz oder teilweise Teil der zentralen Prozessoreinheit 32 sein.

Die Bezahlung gebührenbehafteter Datenangebote 38 erfolgt mittels elektronischer Werteinheiten 40. Dies sind in elektronischer Form dargestellte Geldwerte, die eine beliebige Stückelung besitzen können. Insbesondere können die elektronischen Werteinheiten 40 Geldwerte repräsentieren, die kleiner sind als die kleinste physisch erhältliche Stückelung. Jeweils eine von einem Nutzer 10,12 festgelegte Anzahl von elektronischen Werteinheiten 40 mit einem ebenfalls vom Nutzer 10, 12 festgelegten Geldwert pro Einheit wird in einem Wertblock 41 zusammengefaßt, zu dem ferner jeweils ein Wertblockdoppel 42 gebildet wird. Jeder Wertblock 41 und sein zugehöriges Wertblockdoppel 42 sind mit einer Wertblockkennung 43 versehen. Elektronische Werteinheiten 40, die von einem Nutzer 10, 12 für Zahlungen eingesetzt wurden, werden mit einem Benutzungsmarker 46 versehen, der z.B. die Gestalt eines Flags besitzt.

Zur Abwicklung der Zahlungsvorgänge ist dem Kontomodul 33 ein Speicher 50 zugeordnet, worin es die Wertblockdoppel 42 mit den elektronischen Werteinheiten 40 zur Bezahlung von gebührenbehafteten Datenangeboten 38 verwaltet. Die Verwaltung der Wertblockdoppel 42 erfolgt getrennt nach Nutzern 10, 12 und nach Leistungsanbietern. Der Speicher 50 gliedert sich hierzu in mehrere Bereiche 54, in denen für jeden einzelnen Nutzer 10, 12 jeweils ein separates Werteinheitendepot 54 geführt wird. Jedes Werteinheitendepot 54 ist mit einer individuellen Depotkennung 55 versehen. In dem Werteinheitendepot 54 sind jeweils auf einen einzelnen Leistungsanbieter bezogene Wertblockdoppel 42 abgelegt. Der Bezug zu einem Leistungsanbieter wird durch eine jedem Wertblockdoppel 42 beigefügte Anbieterkennung 44 hergestellt. Jeder Wertblockdoppel 42 ist desweiteren mit einer Wertblockkennung 43 versehen. Die Verwaltung der Wertblockdoppel 42 sowie der Werteinheitendepots 54 erfolgt jeweils zeitlich befristet bis zum Eintritt eines vorbestimmten Ereignisses, insbesondere bis zum Ablauf einer vorgegebenen Haltedauer. Die Anzahl der verwalteten Werteinheitendepots 54 korrespondiert daher jeweils zu der Anzahl der Nutzer 10, 12, die innerhalb einer bestimmten Zeitspanne auf dem Netzserver 30 gebührenbehaftete Datenangebote 38 ausgewählt haben.

Das Kontomodul 33 ist desweiteren dazu ausgebildet, wenn erforderlich, die Übermittlung einer Aufforderung zum Anlegen neuer Wertblockdoppel 42 bzw. neuer elektronischer Werteinheiten 40 und zur Herstellung eines Kontaktes zu einer Zahlungszentrale 60 an einen Nutzer 10, 12 zu veranlassen.

Das Datennetz 22 ist nach den gleichen Maßgaben ausgeführt wie das Datennetz 20. Es ist ferner mit dem Datennetz 20 verknüpft, so daß ein Nutzer 10, 12 einen direkten Kontakt zu der Zahlungszentrale 60 herstellen kann. Die Verknüpfung kann über eine unabhängige Verknüpfungseinrichtung erfolgen, die zwischen die beiden Datennetze 20, 22 geschaltet ist. Das Datennetz 22 kann auch identisch mit dem Datennetz 20 sein.

Die Zahlungszentrale 60 dient zur Erzeugung und Abrechnung von elektronischen Werteinheiten 40. Sie hat ebenfalls die Gestalt einer Großrechenanlage mit hoher Rechenleistung, auf der in Softwareform insbesondere Funktionen zur Führung von Konten realisiert sind. Sie befindet sich vorzugsweise bei einem auf die Abwicklung von Zahlungen spezialisierten Dienstleister und ist nur für einen begrenzten, besonders autorisierten Personenkreis zugänglich.

Wesentliche Elemente der Zahlungszentrale 60 sind eine zentrale Prozessoreinheit 62, ein damit verbundener, in einem dauerhaften Speicher realisierter erster Bereich 70 zur Aufnahme der Konten 72 von Nutzern 10,12, ein mit der zentralen Prozessoreinheit 62 verbundener Zwischenspeicher 64 zur temporären Aufnahme von Wertblöcken 41 mit den darin enthaltenen elektronischen Werteinheiten 40 sowie ein ebenfalls in einem dauerhaften Speicher realisierter, dritter Anbieterbereich 66 zur Führung von Konten 80 von Leistungsanbietern. Der Nutzerkontenbereich 70 ist ferner über ein Datennetz 24 an eine oder mehrere Ladeeinrichtungen 90 angeschlossen.

Die zentrale Prozessoreinheit 62 dient in bekannter Weise zur Ausführung sämtlicher Datenverarbeitungsoperationen innerhalb der Zahlungszentrale 60 sowie zur Steuerung des Datenaustausches mit dem Netzserver 30 über das Datennetz 22 und des Datenaustausches mit dem Hintergrundsystem 96 über das Datennetz 26. Desweiteren ist die zentrale Prozessoreinheit 62 dazu ausgebildet, wenn erforderlich, eine Kommunikation zu einem Nutzer 10,12 aufzubauen, um diesen zu einem Zugriff auf sein Konto 72 zu veranlassen.

Im Nutzerkontenbereich 70 wird für jeden registrierten Nutzer 10, 12 ein separates Konto 72 geführt. Im Speicher 64 hält die zentrale Prozessoreinheit 62 die von den Nutzern 10,12 erzeugten Wertblöcke 41, bis sie durch Abrechnung der darin enthaltenen Werteinheiten 40, d.h. durch Gutschrift bzw. durch Rückerstattung abgerechnet werden. Jeder Wertblock 41 ist mit einer Wertblockkennung 43, einer Anbieterkennung 44 sowie einer Nutzerkennung 45 versehen. Im Anbieterköntenbereich 66 wird für jeden bei der Zahlungszentrale 60 registrierten Leistungsanbieter ein separates Anbieterkonto 80 geführt.

Die Ladeeinrichtungen 90 ermöglichen es Nutzern 10, 12, ein Nutzerkonto 72 mit Geldwerten aufzufüllen. Sie können hierzu beispielsweise als Kartenleser ausgeführt sein, welche das Laden eines Nutzerkontos 72 gegen eine Geldkarte, gegen eine vorausbezahlte Karte und/oder gegen eine Kreditkarte ermöglichen. Daneben sind beliebige andere Ausgestaltungen und/ oder andere Ladekonzepte möglich.

Der Nutzerkontenbereich 70 sowie der Anbieterkontenbereich 66 können einzeln oder beide, wie durch gestrichelte Linien angedeutet, auch als eigenständige Einheiten realisiert sein, die räumlich getrennt von der Zahlungszentrale 60 installiert sind und von unabhängigen Kontenbetreibern 92, 94 betrieben werden. Der Nutzerkontenbereich 70 kann beispielsweise bei einer anderen Zahlungszentrale eingerichtet sein. Der Anbieterkontenbereich 66 kann beispielsweise bei einem der Leistungsanbieter eingerichtet sein.

Befinden sich Nutzerkontenbereich 70 oder Anbieterkontenbereich 66 bei externen Kontenbetreibern 92, 94, wird in der Zahlungszentrale 60 ein der zentralen Prozessoreinheit 62 zugeordneter Transaktionsspeicher 68 eingerichtet, der ein Segment 84 zur Aufnahme von Garantiebelegen 85 über Existenz und Inhalt von Nutzerkonten 72, ein Segment 86 zur Aufnahme von Informationen über Leistungsanbieter sowie ein Segment 88 zur Führung von Sammelkonten aufweist. Die Prozessoreinheit 62 ist in diesem Fall dazu ausgebildet, den Kontenbetreibern 92, 94 die bei der Abrechnung von Wertblöcken 41 gutzuschreibenden bzw. zurückzuerstattenden elektronischen Werteinheiten 40 mitzuteilen. Neben einer vollständig externen Einrichtung der beiden Kontenbereiche 66, 70 ist weiter auch eine Mischrealisierungsform möglich, bei der zum einen in der Zahlungszentrale 60 selbst, zum anderen in externen Einrichtungen 92, 94 Nutzerkonten 72 bzw. Anbieterkonten 80 geführt werden.

Das Datennetz 24 ist ein für Zahlungstransaktionen geeignetes, gegen externe Angriffe hochsicheres Netz. Physisch ist es zweckmäßig als separates Netz ausgeführt. Sofern Mittel zur Herstellung von sicheren Ende-zu-Ende-Verbindungen zur Verfügung stehen, kann das Datennetz 24 jedoch auch ein offenes Netz sein, insbesondere das Internet.

Das Datennetz 26 ist gleichfalls ein zur Ausführung von Zahlungstransaktionen geeignetes sicheres Netz und zweckmäßig als separates Netz ausgeführt. Sofern Mittel zur Ausbildung hinreichend sicherer Ende-zu-Ende-Verbindungen zur Verfügung stehen, kann das Datennetz 26 ebenfalls auf einem offenen Netz beruhen und z.B. durch das Internet realisiert sein.

Das Hintergrundsystem 96 dient zur bankseitigen Umsetzung der Kontobewegungen zwischen den Nutzerkonten 72 und den Anbieterkonten 80. Es ist zweckmäßig durch die Datenverarbeitungszentrale eines Geldinstituts realisiert und stark zugriffsgeschützt.

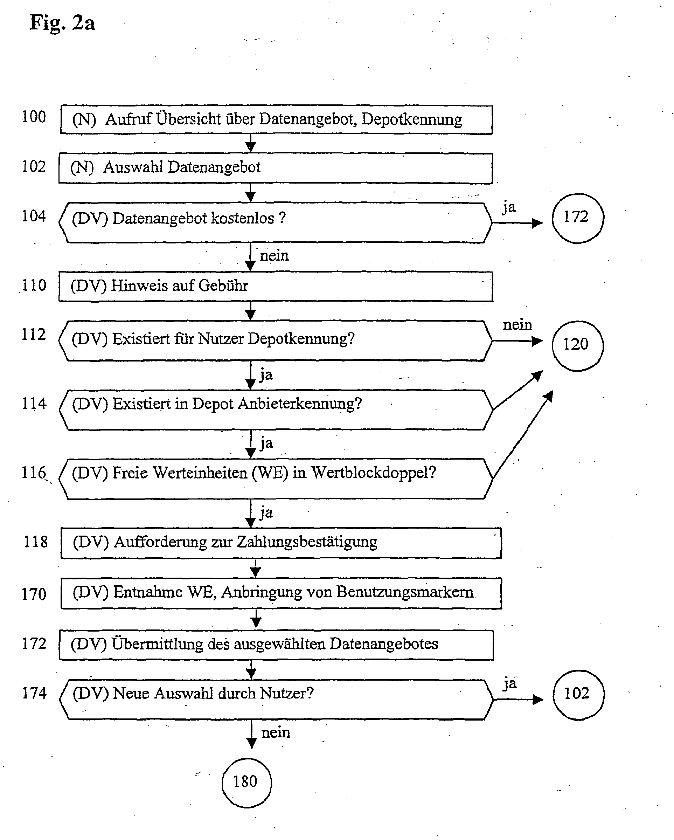

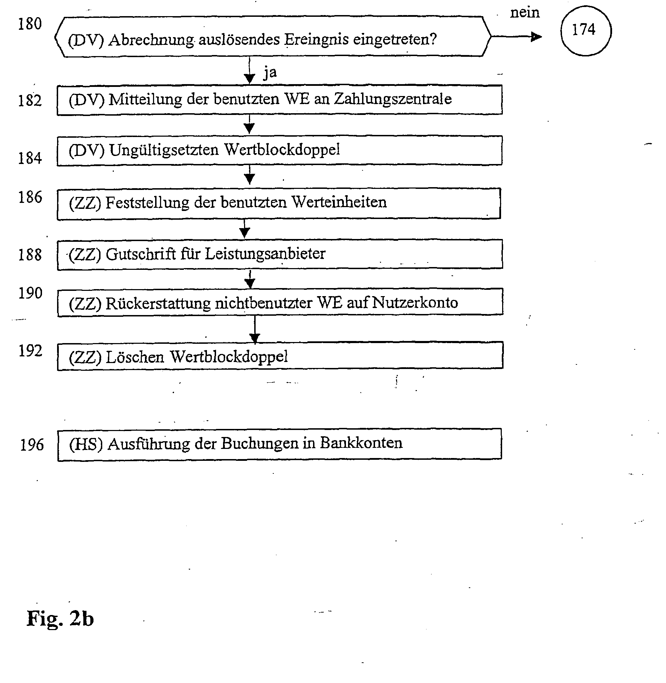

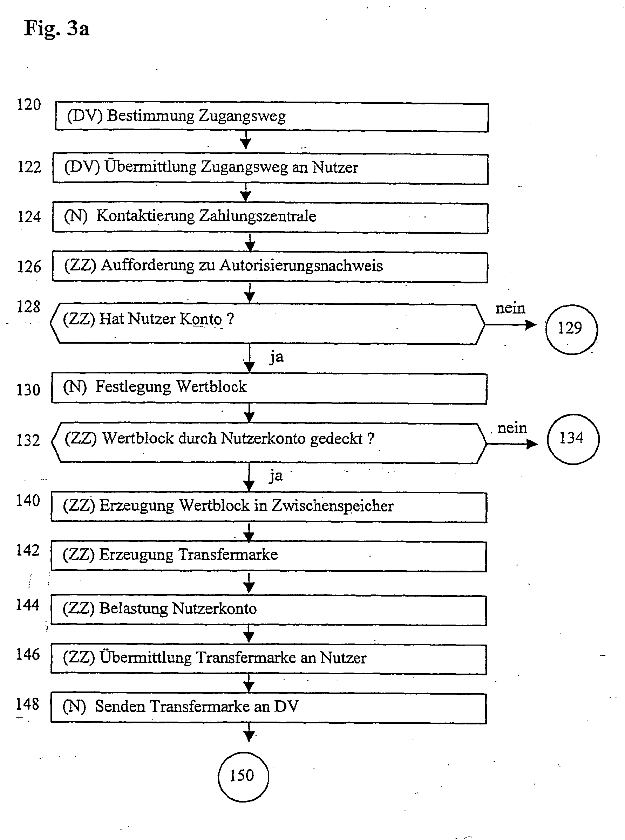

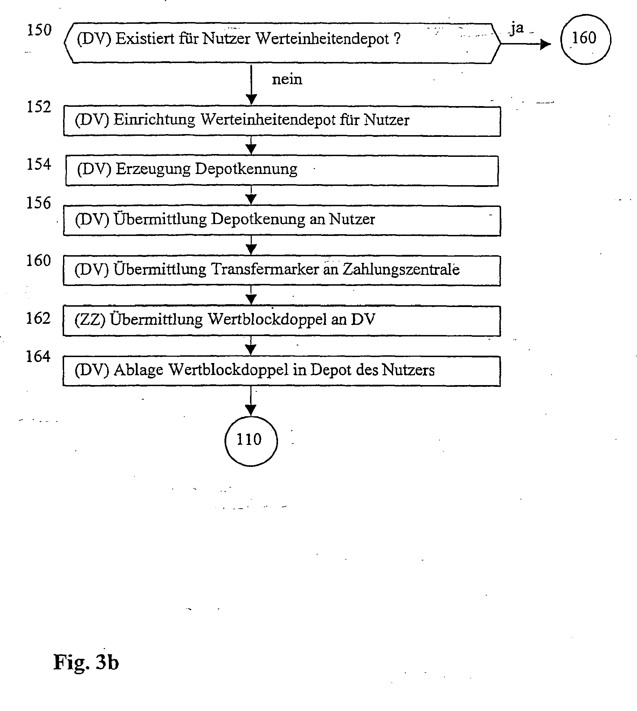

Unter Bezugnahme auf die Fig. 2 bis 4 wird nachfolgend die Nutzung des vorstehend beschriebenen Transaktionssystems erläutert.

Die Nutzung setzt ein, indem ein Nutzer 10, 12, über das Datennetz 20 eine Verbindung zu einem Netzserver 30 herstellt und eine Übersicht über die darauf bereitgestellten Datenangebote 36, 38 aufruft, um diese nachfolgend gegebenenfalls einzusehen, Schritt 100.

Zweckmäßig bei jedem Aufruf eines Datenangebots 36, 38, zumindest aber beim ersten Aufruf eines Datenangebots 36, 38, übermittelt der Nutzer 10, 12 dem Netzserver 30 zugleich eine Depotkennung 55, sofern er eine solche bereits besitzt. Hat er die Übersicht eingesehen, wählt er ein Datenangebot 36, 38 aus, das er abrufen möchte, Schritt 102.

Die zentrale Prozessoreinheit 32 des Netzservers 30 prüft darauf, ob das ausgewählte Datenangebot 36, 38 kostenfrei oder gebührenbehaftet ist, Schritt 104. Ist es kostenfrei, übermittelt die zentrale Prozessoreinheit 32 das gewünschte Datenangebot 36, 38 unmittelbar an den nachfragenden Nutzer, Schritt 172.

Ergibt die Prüfung im Schritt 104, daß das nachgefragte Datenangebot 36, 38 gebührenbehaftet ist, schaltet die zentrale Prozessoreinheit 32 das Kontomodul 33 ein. Dieses prüft, ob ihm von dem Nutzer 10, 12 bereits eine Depotkennung 55 vorliegt, Schritt 112. Desweiteren stellt es die den Leistungsanbieter bezeichnende Anbieterkennung 44 sowie die Höhe der geforderten Gebühr fest. Vorzugsweise übermittelt es dem Nutzer 10, 12 einen entsprechenden Hinweis, Schritt 110.

Liegt eine Depotkennung 55 vor, prüft es, ob sich in dem durch die Depot-kennung 55 bezeichneten Werteinheitendepot 54 ein Wertblockdoppel 42 befindet, das eine dem Leistungsanbieter des ausgewählten Datenangebotes 38 zugeordnete Anbieterkennung 44 besitzt, Schritt 114.

Ist im Werteinheitendepot 54 des Nutzers 10, 12 ein solches Wertblockdoppel 42 vorhanden, prüft das Kontomodul 33, ob sich in dem Wertblockdoppel 42 noch ausreichend elektronische Werteinheiten 40 zur Bezahlung der zuvor festgestellten Gebühr befinden, Schritt 116.

Stellt das Kontomodul 33 fest, daß im Werteinheitendepot 54 ausreichend auf den Leistungsanbieter ausgezeichnete elektronische Werteinheiten 40 vorhanden sind, sendet es dem Nutzer 10, 12 zweckmäßig eine Rückmeldung, in der es dem Nutzer 10, 12 mitteilt, wieviele elektronische Werteinheiten 40 für den Abruf des ausgewählten, gebührenbehafteten Datenangebotes 38 zu entrichten sind und mit der es den Nutzer 10, 12 auffordert, der Entrichtung an den Leistungsanbieter zuzustimmen, Schritt 118. Diese Zustimmungsaufforderung kann auch entfallen und stattdessen die Existenz einer Depotkennung 54 als Zustimmung angesehen werden.

Liegt die Zustimmung des Nutzers 10, 12 vor, entnimmt das Kontomodul 33 die zur Bezahlung des Datenangebotes 38 notwendige Anzahl elektronischer Werteinheiten 40 aus dem Wertblockdoppel 42, indem es sie mit einem Benutzungsmarker 46 versieht, Schritt 170.

Weiter veranlaßt das Kontomodul 33 die zentrale Prozessoreinheit 32 zur Übermittlung des ausgewählten Datenangebotes 38 an den Nutzer 10, 12, Schritt 172.

Im Anschluß hieran ist die zentrale Prozessoreinheit 32 zur Entgegennahme eines weiteren Zugriffes auf ein auf dem der Netzserver 30 bereitgehaltenes Datenangebot 36, 38 durch den Nutzer 10,12 bereit, Schritt 174. Startet der Nutzer 10, 12 einen erneuten Zugriff, werden die Schritte 102 bis 174 wiederholt.

Unabhängig von einem neuen Zugriff des Nutzers 10, 12 konserviert der Netzserver 30 die erzeugten nutzerspezifischen Datenstrukturen, d.h. insbesondere das Werteinheitendepot 54 mit seinem Inhalt und die zugehörige Depotkennung 55 bis zum Eintritt eines vorbestimmten Ereignisses. Zweckmäßig ist dieses Ereignis der Ablauf einer vorbestimmten Haltezeit. Erfolgt innerhalb einer solchen Haltezeit ein weiterer Zugriff desselben Nutzers 10, 12 auf ein auf dem Netzserver 30 bereitgehaltenes Datenangebot 36, 38, werden für eventuelle Zahlungen wieder die vorhandene Depotkennung 55 und das vorhandene Werteinheitendepot 54 genutzt.

Der Eintritt des Ereignisses, also etwa der Ablauf der Haltezeit, wird unabhängig von einem neuen Zugriff eines Nutzers 10, 12 vom Kontomodul 33 überwacht, Schritt 180. Solange das Ereignis nicht eintritt, also etwa die Haltezeit nicht abgelaufen ist, bleibt der Netzserver 30 auf Zugriffe durch denselben Nutzer 10, 12 vorbereitet. Stellt das Kontomodul 33 für ein Werteinheitendepot 54 den Eintritt des Ereignisses fest, veranlaßt es die Abwicklung des Werteinheitendepots 54 und die Abrechnung der von dem Nutzer 10,12 verwendeten elektronischen Werteinheiten 40.

Zweckmäßig wird der Eintritt mehrerer unterschiedlicher Ereignisse überwacht, wobei ein Ereignis zur endgültigen Abwicklung eines Werteinheitendepots 54 führt, während andere Ereignisse eine Zwischenaktualisierung eines Werteinheitendepots 54 durch Abrechnung einzelner oder mehrerer Wertblockdoppel 42 auslösen und die Werteinheitendepots 54 zunächst erhalten bleiben. Solche anderen auslösenden Ereignisse können zum Beispiel der vollständige Verbrauch aller Werteinheiten 40 einzelner Wertblockdoppel 42, der Ablauf einer einem Wertblockdoppel 42 zugewiesenen Gültigkeitsdauer oder das Ausbleiben eines Zugriffes auf einen Wertblockdoppel 42 in einem vorgegebenen Zeitintervall sein.

Zur Abwicklung eines Werteinheitendepots 54 sperrt das Kontomodul 33 zunächst alle in dem Werteinheitendepot 54 befindlichen Wertblockdoppel 42 gegen eine weitere Entnahme von elektronischen Werteinheiten 40. Nachfolgend übermittelt es der Zahlungszentrale 60 über das Datennetz 22 alle in dem Werteinheitendepot 54 vorhandenen Wertblockdoppel 42, Schritt 182. Ist die Übermittlung der Wertblockdoppel 42 an die Zahlungszentrale 60 erfolgreich ausgeführt macht es die Depotkennung 55 und damit die in dem Werteinheitendepot 54 enthaltenen Wertblockdoppel 42 ungültig, Schritt 184. Die Abrechnung einzelner Wertblockdoppel 42 im Rahmen einer Zwischenaktualisierung erfolgt analog, wobei jedoch nicht das gesamte Werteinheitendepot 54, sondern nur die Wertblockkennung 43 der abgerechneten Wertblockdoppel 42 ungültig gemacht wird.

Die rückübermittelten Wertblockdoppel 42 unterwirft die Zahlungszentrale 60 zunächst einer Konsistenzprüfung, in der sie anhand der Wertblockkennung 43 feststellt, ob im Zwischenspeicher 64 zu jedem rückübermittelten Wertblockdoppel 42 ein zugehöriger Wertblock 41 abgelegt ist.

Ist Konsistenz gegeben und damit die Vorlage zur Abrechnung berechtigt, wertet die Zahlungszentrale 60 die in den Wertblockdoppeln 42 angebrachten Benutzungsmarker 46 aus und bestimmt die Zahl der nicht benutzten Werteinheiten 40, Schritt 186. Den den unbenutzten elektronischen Werteinheiten 40 entsprechenden Geldwert erstattet sie danach zurück an das Konto 72 des Nutzers 10, 12, Schritt 190; den den benutzten Werteinheiten 40 entsprechenden Geldwert schreibt sie dem Konto 80 des durch die Anbieterkennung 44 des Wertblockes 41 bezeichneten Leistungsanbieters gut, Schritt 188. Anschließend löscht die Zahlungszentrale 60 den Wertblock 41 aus dem Zwischenspeicher 64, Schritt 192.

Die bei der Abwicklung eines Wertblockes 41 durchgeführten Bewegungen von elektronischen Werteinheiten 40 werden durch das Kontomodul 33 in einem Protokoll festgehalten.

In einem nachgeschalteten Schritt 196, der zeitlich nicht mit dem Zugriff eines Nutzers 10, 12 auf einen Netzserver 30 korreliert sein muß, veranlaßt die Zahlungszentrale 60 über das Datennetz 26 die Gutschriften der gutgeschriebenen Beträge auf den Bankkonten der Leistungsanbieter im Hintergrundsystem 96.

Stellt das Kontomodul 33 bei der Prüfung in den Schritten 112,114,116 fest, daß im Werteinheitendepot 54 für eine Zahlung benötigte elektronischem Werteinheiten 40 nicht oder nicht in ausreichendem Umfang vorliegen - dies ist zumindest beim jeweils ersten Zugriff auf ein gebührenbehaftetes Datenangebot 38 eines Leistungsanbieters stets der Fall - bestimmt es einen Zugangsweg, um den Nutzer 10, 12 direkt mit der für den Netzserver 30 zuständigen Zahlungszentrale 60 in Verbindung zu setzen, Schritt 120. Den Zugangsweg bildet bei Nutzung des Internets für die Datennetze 20, 22 etwa eine Internetadresse der Zahlungszentrale 60. Den Zugangsweg zusammen mit der Identifizierung des Leistungsanbieters und der Höhe der geforderten Gebühr übermittelt das Kontomodul 33 dem Nutzer 10, 12, Schritt 122.

Gemäß dem mitgeteilten Zugangsweg kontaktiert darauf der Nutzer 10,12 direkt die Zahlungszentrale 60, Schritt 124, und übermittelt ihr die vom Netzserver 30 mitgeteilte Identifizierung des Leistungsanbieters und die Höhe der Gebühr.

Die zentrale Prozessoreinheit 62 der Zahlungszentrale 60 fordert den Nutzer 10, 12 zunächst dazu auf, sich zu autorisieren, Schritt 126, oder ggf. mitzuteilen, daß er bei der Zahlungszentrale 60 noch nicht registriert ist. Die Autorisierung erfolgt z.B. mittels einer von der Zahlungszentrale 60 vergebenen Nutzerkennung 45 in Verbindung mit einem von dem Nutzer 10, 12 festgelegten Paßwort.

Ist die Autorisierung erfolgt, prüft die zentrale Prozessoreinheit 62 weiter, ob für den Nutzer 10, 12 bereits ein Konto 72 in der Zahlungszentrale 60 eingerichtet ist, Schritt 128.

Hat sich der Nutzer 10, 12 autorisiert und ist für ihn bereits ein Konto 72 eingerichtet, übermittelt ihm die zentrale Prozessoreinheit 62 eine Aufforderung zur Angabe der Anzahl von elektronischen Werteinheiten 40, die erstellt werden soll, Schritt 130. Mit der Aufforderung präsentiert die zentrale Prozessoreinheit 62 dem Nutzer 10, 12 hierbei zweckmäßig zugleich Informationen über den Leistungsanbieter, z.B. dessen Namen und dessen Kontaktadresse, sowie eine Empfehlung für eine bestimmte Anzahl von zu erstellenden elektronischen Werteinheiten 40. Die empfohlene Anzahl ermittelt die zentrale Prozessoreinheit 62 aus der Gebühreninformation sowie aus anderen Informationen des Leistungsanbieters.

Mittels der an seiner Nutzerschnittstelle 10, 12 bereitgestellten Eingabemittel bestimmt der Nutzer 10, 12 daraufhin, wieviele elektronische Werteinheiten 40 in dem Wertblock 41 enthalten sein sollen, Schritt 130. Die Stückelung der elektronischen Werteinheiten 40 ist dabei auf die Datenangebote 38 des Leistungsanbieters abgestimmt.

Die zentrale Prozessoreinheit 62 prüft nun, ob der Gegenwert des vom Nutzer 10, 12 bestimmten Wertblockes 41 durch dessen Konto 72 gedeckt ist, Schritt 132.

Ist das Konto 72 des Nutzers 10, 12 nicht ausreichend gedeckt, übermittelt sie dem Nutzer 10, 12 eine Mitteilung, durch die der Nutzer 10,12 aufgefordert wird, sein Konto 72 über eine der Ladeeinrichtungen 90 aufzufüllen, Schritt 134. Der Nutzer 10, 12 kann daraufhin sein Konto 72 z.B. unter Verwendung einer Geldkarte an einer als Geldkartenlesegerät ausgebildeten Ladeeinrichtung 90 auffüllen. Sofern das Geldkartenlesegerät in Gestalt einer sicheren Ende-zu-Ende-Verbindung ausgeführt ist, kann das Auffüllen auch unmittelbar z.B. über den Heimcomputer des Nutzers 10, 12 erfolgen. Die im Netzserver 30 angelegten nutzerspezifischen Daten bleiben dann erhalten und müssen nicht neu hergestellt werden. Stehen derartige Mittel nicht zur Verfügung, muß der Nutzer 10, 12 die Verbindung zu dem Netzserver 30 und damit den Zugriff auf das ausgewählte Datenangebot 38 zunächst abbrechen, um ihn nach Auffüllen seines Kontos 72 erneut herzustellen. Die Höhe des maximalen Auffüllbetrages sowie das maximale Guthaben auf dem Konto 72 sind im Hinblick auf die Sicherheit zweckmäßig begrenzt.

Ergibt die Prüfung im Schritt 132, daß das Konto 72 des Nutzers 10,12 ausreichend gedeckt ist, erzeugt die zentrale Prozessoreinheit 62 einen Wertblock 41 mit elektronischen Werteinheiten 40 in der vom Nutzer 10, 12 festgelegten Anzahl. Den Wertblock 42 versieht sie mit einer Anbieterkennung 44, die ihn auf den Leistungsanbieter auszeichnet, dessen Datenangebot 38 die Erzeugung ausgelöst hat, einer Nutzerkennung 45 zur Identifizierung des Nutzers 10, 12 sowie einer Wertblockkennung 43 zur Identifizierung des Wertblockes 41. Anbieterkennung 44 und Nutzerkennung 45 ermittelt die zentrale Prozessoreinheit dabei aus den vom Nutzer 10, 12 bei der Werteinheitenanforderung übermittelten Informationen, bei der Wertblockkennung 43 handelt es sich zweckmäßig um eine kryptographisch sichere Zufallszahl. Den so gebildeten Wertblock 41 überträgt sie anschließend in den Zwischenspeicher 64, Schritt 140.

Zu dem Wertblock 41 erzeugt die zentrale Prozessoreinheit 62 weiterhin ein Wertblockdoppel 42. Das Wertblockdoppel 42 stimmt mit dem Wertblock 41 überein, enthält jedoch nicht die Nutzerkennung 45 und ist damit anonymisiert. Das anonymisierte Wertblockdoppel 42 wird zunächst ebenfalls in der Zahlungszentrale 60 zwischengespeichert.

Desweiteren erzeugt die Zahlungszentrale 60 zu dem Wertblock 41 eine Transfermarke, Schritt 142, welche nachfolgend als Beleg für die Erstellung eines Wertblockes 41 dient. Gemäß dem Geldwert des Wertblockes 41 belagstet sie sodann das Konto 72 des Nutzers 10, 12, Schritt 144.

Im nächsten Schritt 146 übermittelt die zentrale Prozessoreinheit 62 die Transfermarke dem Nutzer 10, 12. Dieser kontaktiert darauf wieder den Netzserver 30 und übermittelt ihm die von der Zahlungszentrale 60 erhaltene Transfermarke, Schritt 148.

Auf den Eingang der Transfermarke hin prüft nun das Kontomodul 33 des Netzservers 30, ob für den Nutzer 10, 12 bereits ein Werteinheitendepot 54 im Speicher 50 eingerichtet wurde, Schritt 150. Ist das nicht der Fall, legt es im Speicherbereich 52 ein Werteinheitendepot 54 an, Schritt 152, und erzeugt zu dem neuen Werteinheitendepot 54 eine Depotkennung 55, Schritt 154, welche es an den Nutzer 10, 12 übermittelt, Schritt 156. Die Depotkennung 55 wird beim Nutzer 10, 12 durch die von ihm verwendete Schnittstelle 10, 12 gespeichert. Vorzugsweise erfolgt die Speicherung flüchtig und geht etwa zeitbegrenzt oder mit dem Abschalten der Schnittstelle 10, 12 verloren.

Besteht danach für den Nutzer 10, 12 ein Werteinheitendepot 54, übersendet das Kontomodul 33 die vom Nutzer 10, 12 erhaltene Transfermarke an die Zahlungszentrale 60, Schritt 160. Diese ermittelt hierauf den durch die Transfermarke bezeichneten Wertblock 41 und das dazugehörige Wert-blockdoppel 42.

Das anonymisierte Wertblockdoppel 42 übermittelt die Zahlungszentrale 60 an den Netzserver 30, welcher es in dem Werteinheitendepot 54 des Nutzers 10, 12 ablegt, Schritt 164.

Die Schritte 152, 154, 156, 160, 162 können auch in einer von der zuvor zugrundegelegten abweichenden Reihenfolge durchgeführt werden. So können Erzeugung und Übermittlung der Depotkennung 54 an den Nutzer 10, 12 und die Übermittlung der Transfermarke an die Zahlungszentrale 60 parallel ausgeführt werden oder kann die Übermittlung der Depotkennung 54 an den Nutzer 10, 12 erst nach der Übermittlung des Wertblockdoppels 42 an den Netzserver 30 erfolgen.

Im Anschluß an Schritt 164 sendet der Netzserver 30 dem Nutzer 10, 12 eine Aufforderung, erneut das im Schritt 104 aufgerufene Datenangebot 38 aufzurufen, Schritt 110. Mit diesem erneuten Aufruf übermittelt der Nutzer 10, 12 dem Netzserver 30 dann die zuvor, im Schritt 156, erhaltene Depotkennung 55.

Über die erzeugten und an das Kontomodul 44 übergebenenen elektronischen Werteinheiten 40 erstellt die zentrale Prozessoreinheit 62 ein Protokoll, das sie unter Bezug auf das Konto 72 des Nutzers 10, 12 abspeichert und das von dem Nutzer 10, 12 aufrufbar ist.

Ergibt die Autorisierungsaufforderung im Schritt 128, daß in der Zahlungszentrale 60 für einen Nutzer 10, 12 noch kein Konto 72 eingerichtet ist, startet die zentrale Prozessoreinheit 62 eine Routine zur Registrierung des Nutzers 10, 12 und zur Einrichtung eines dem Nutzer 10, 12 zugeordneten Kontos 72, Schritt 129. Der Nutzer 10, 12 erhält dabei von der zentralen Prozessoreinheit 62 eine von der Zahlungszentrale 60 vergebene Nutzerkennung 45 und wird weiterhin aufgefordert, ein Paßwort festzulegen. Vorgesehen sein kann desweiteren die Einholung weiterer üblicher Angaben über den Nutzer 10, 12. Liegen der zentralen Prozessoreinheit 62 alle zur Registrierung eines Nutzers 10,12 benötigten Angaben vor, richtet sie ein Konto 72 für den Nutzer ein, Schritt 129.

Ist das Konto 72 eingerichtet, führt die zentrale Prozessoreinheit 62 die Schritte 132 fortfolgend aus und fordert den Nutzer 10, 12 auf, das Konto 72 aufzufüllen, um nachfolgend eine Erzeugung eines Wertblockes 41 zu ermöglichen.

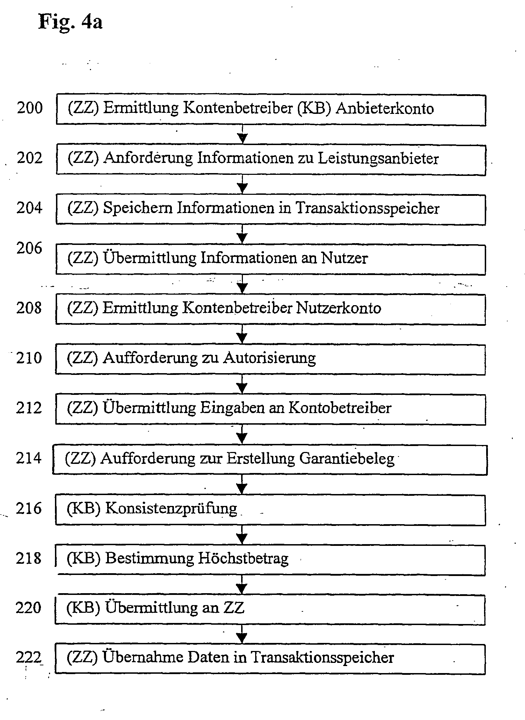

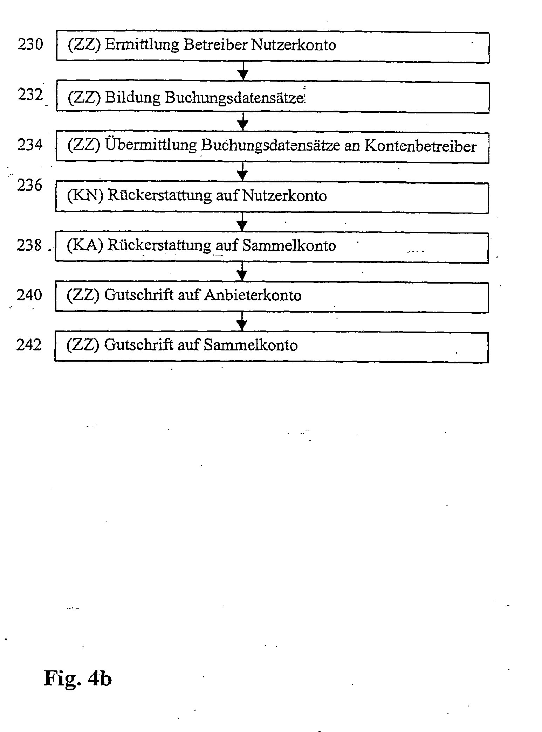

Fig. 4 zeigt eine Variante des vorstehend beschriebenen Verfahrens, die zur Anwendung kommt, wenn der Nutzerkontenbereich 70 und der Anbieterkontenbereich 66 nicht in der Zahlungszentrale 60 selbst, sondern von externen Kontenbetreibern 92, 94 geführt werden.

Ergibt in einer solchen Anordnung die Ausführung der Schritte 112,114 oder 116, daß ein Zugriff auf die Zahlungszentrale 60 erforderlich ist, kontaktiert der Nutzer 10,12 entsprechend Schritt 126 über den mitgeteilten Zugangsweg die Zahlungszentrale 60 und übermittelt ihr die Identifizierung des Anbieters.

Die Zahlungszentrale 60 bestimmt nun einen Kontenbetreiber 94, bei dem ein Konto 80 des Leistungsanbieters geführt wird, Schritt 200, und fordert von ihm Informationen über den Leistungsanbieter, Schritt 202. Die darauf von dem Kontenbetreiber 94 gelieferten Informationen speichert die Zahlungszentrale 60 im Transaktionsspeicher 68, Schritt 204. Zudem übermittelt sie die Informationen an den Nutzer 10,12, Schritt 206.

Desweiteren ermittelt die Zahlungszentrale 60 anhand der Nutzerkennung 45 einen Kontenbetreiber 92, bei dem ein Konto 72 des Nutzers 10,12 geführt wird, Schritt 208.

Sodann fordert sie den Nutzer 10, 12 zur Autorisierung auf, Schritt 210. Die vom Nutzer 10, 12 daraufhin eingegebene Nutzerkennung 45 und das Paßwort übermittelt die Zahlungszentrale 60 an den das Nutzerkonto 72 führenden Kontenbetreiber 92, Schritt 212. Zugleich fordert sie den Kontenbetreiber 92 auf, einen Garantiebeleg zu erstellen, mit dem eine Deckung des Nutzerkontos 72 garantiert wird, Schritt 214.

Der Kontenbetreiber 92 prüft die Konsistenz von Nutzerkennung 45 und Paßwort, Schritt 216, und bestimmt unter Zugriff auf das Konto 72 des Nutzers 10,12 einen Höchstbetrag, über den er sodann einen Garantiebeleg 85 erstellt, Schritt 218. Den Garantiebeleg 85 zusammen mit der Nutzerkennung 45 übermittelt er an die Zahlungszentrale 60, Schritt 220.

Diese übernimmt die erhaltenen Daten in eine im Transaktionsspeicher 68 geführte Nutzerkartei 89, Schritt 222. Unter Einbeziehung des Nutzers 10, 12 wird nun Schritt 130 ausgeführt und ein Wertblock 41 sowie ein zugehöriges Wertblockdoppel 42 erzeugt. Für die danach folgende Prüfung, Schritt 132, auf Deckung der zu erzeugenden Werteinheiten 40 zieht die Zahlungszentrale 60 den Garantiebeleg 85 heran.

Erstellte Wertblöcke 41 überträgt die Zahlungszentrale 60 in den Transaktionsspeicher 68; die Wertblockdoppel 42 übermittelt sie nach Eingang entsprechender Transfermarken an den Netzserver 30.

Soll ein Wertblockdoppel 42 abgerechnet werden, führt die Zahlungszentrale 60 zunächst die Schritte 180 bis 184 aus. Stehen danach der gutzuschreibende sowie der zurückzuerstattende Geldwert fest, bestimmt die Zahlungszentrale 60 jeweils einen ein Nutzerkonto 72 sowie einen ein Anbieterkonto 80 führenden Kontenbetreiber 92, 94, Schritt 230. Über Gutschrift und Rückerstattung bildet sie ferner jeweils einen Buchungsdatensatz, der eine Kennung der Zahlungszentrale 60 sowie eine Angabe über eine Zahlungsperiode enthält, Schritt 232. Der für Kontenbetreiber 94 des Anbieterkontos 80 bestimmte Buchungsdatensatz enthält ferner die Anbieterkennung 44 und eine Kennung des das Nutzerkonto 72 führenden Kontenbetreibers 92. Der für den Kontenbetreiber 92 des Nutzerkontos 72 bestimmte Buchungsdatensatz enthält weiterhin die Nutzerkennung 45 sowie eine Kennung des das Anbieterkonto 80 führenden Kontenbetreibers 94.

Die so gebildeten Buchungsdatensätze übermittelt die Zahlungszentrale 60 an die Kontenbetreiber 92, 94, Schritt 234. Den Buchungsdatensätzen entsprechende Buchungen nimmt sie ferner in dem im Segment 88 geführten Sammelkonto vor.

Diese führen entsprechend die Gutschrift bzw. die Rückerstattung im Nutzerkonto 72 bzw. im Anbieterkonto 80 aus, Schritte 236, 238. Zweckmäßig nehmen die Kontenbetreiber 92, 94 die Buchungen zudem parallel jeweils auch in einem jeweils geführten Sammelkonto vor, welche unmittelbar die Gesamteingänge bzw. Gesamtausgänge des jeweiligen Kontenbetreibers 92, 94 aufzeigen und anhand derer zu einem späteren Zeitpunkt Konsistenzprüfungen möglich sind, Schritte 240, 242.

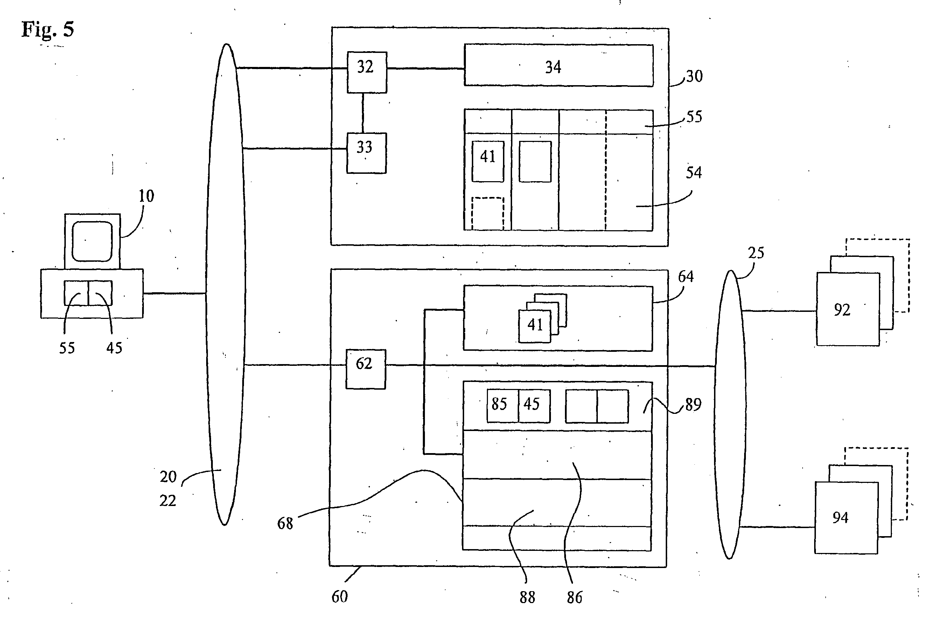

Fig. 5 veranschaulicht eine mögliche praktische Realisierung des vorstehend beschriebenen Verfahrens, in der die Wertblockdoppel 42 als Schecks - vorzugsweise über sehr kleine Beträge - bezeichnet werden, welche jeweils eine Mehrzahl von elektronischen Werteinheiten 40 enthalten, und die Konten 72, 80, der Nutzer 10, 12 und der Leistungsanbieter jeweils bei externen Kontobetreibern 92, 94 geführt werden. Scheckerstellung durch den Nutzer 10, 12 sowie die Abrechnung der Schecks 41 erfolgen daher gemäß der anhand Fig. 4 beschriebenen Verfahrensvariante. Soweit Strukturelemente und Verfahrensschritte mit den anhand der Fig. 1 bis 4 beschriebenen übereinstimmen, werden sie nachfolgend im übrigen nur angedeutet oder verkürzt wiedergegeben.

Stellvertretend für die Nutzer 10, 12 ist ein durch einen Heimcomputer repräsentierter Nutzer 10 dargestellt. Der Heimcomputer ist mit einem üblichen Browser ausgestattet. Ferner sind in dem Heimcomputer 10 bereits eine Nutzerkennung 45 für den Zugang zu einer Zahlungszentrale 60 sowie eine Depotkennung 55 für die Durchführung von Bezahlvorgängen auf einem Netzserver 30 gespeichert. Die Speicherung der Depotkennung 55 erfolgt zweckmäßig in Form eines sogenannten Cookies, welches der Browser dem Netzserver 30 übermittelt, sowie der Nutzer 10 nachfolgend ein Datenangebot 36, 38 eines Leistungsanbieters aufruft.

Die Datennetze 20 und 22 sind identisch und beide durch das Internet realisiert. Über das Internet 20, 22 greift der Nutzer 10 mittels des auf dem Heimcomputer 10 eingerichteten Browsers auf den Netzserver 30 zu.

Der Netzserver 30 beinhaltet das Kontomodul 33 sowie die Speichereinrichtungen 34, 50 mit den Datenangeboten 36, 38 und den Werteinheitendepots 54. Auf dem Netzserver 30 bietet eine Mehrzahl von Leistungsanbietern unterschiedliche Datenangebote an. Der Netzserver 30 steht grundsätzlich jedermann zur Einrichtung von weiteren Datenangeboten offen.

Die Zahlungszentrale 60 tritt gleichfalls als Internetteilnehmer auf und wird von einem Zahlungsdienstleister betrieben. Sie ist über das Internet 20, 22 mit dem Nutzer 10 und mit dem Netzserver 30 verbunden. Sie beinhaltet die zentrale Prozessoreinheit 62 mit einer Netzschnittstelle zum Internet, die weiterhin mit dem Zwischenspeicher 64 sowie einem Transaktionsspeicher 68 verbunden ist. Der Transaktionsspeicher 68 beinhaltet eine Nutzerkartei 89 zur Ablage von Garantiebelegen 85 sowie von Nutzerkennungen 45, ein Segment 86 zur Ablage von Informationen über Leistungsanbieter sowie ein Segment 88, in dem Sammelkonten geführt werden.

Das Datennetz 25 ist ein sicheres Datennetz nach Art des Datennetzes 26. Über dieses sichere Datennetz 25 ist die Zahlungszentrale 60 mit jeweils einem oder mehreren Kontenbetreibern 92, 94 verbunden, die vorzugsweise jeweils von weiteren Zahlungsdienstleistern geführt werden. Die die Konten 80 der Leistungsanbieter führenden Kontenbetreiber 94 verwalten zudem jeweils Informationen über die Leistungsanbieter, die sie auf Anfrage an die Netzserver 30 abgeben. Jeder Nutzer 10 und jeder Leistungsanbieter können jeweils bei einer oder mehreren Kontenbetreibern 92, 94 ein Konto 72, 80 besitzen.

Genutzt wird die in Fig. 5 dargestellte Struktur, indem der Nutzer 10 über das Internet 20, 22 den Netzserver 30 kontaktiert und die in dem Speicher 34 bereitgestellten Datenangebote 36, 38 einsieht. Gelangt der Nutzer 10 dabei an ein gebührenbehaftetes Datenangebot 38, prüft der Netzserver 30, ob für den Nutzer 10 im Werteinheitendepot 54 ausreichend unbenutzte, auf den Leistungsanbieter des gewünschten Datenangebotes 38 ausgestellte Schecks 42 vorliegen. Die Prüfung erfolgt mit Hilfe des Cookies, das der auf dem Heimcomputer 10 des Nutzers installierte Browser dem Netzserver 30 übermittelt hat.

Ist danach ein Scheck 42 vorhanden, teilt der Webserver 30 dem Nutzer 10 zweckmäßig mittels einer auf dem Bildschirm seines Heimcomputers 10 darstellbaren Maske die Gebühren für das gewünschte Datenangebot 38 mit und fordert ihn auf, der Zahlung durch Übertragung einer entsprechenden Anzahl von in dem Scheck 42 enthaltenen elektronischen Werteinheiten 40 an den Leistungsanbieter zuzustimmen; eine gesonderte Mitteilung kann gleichwohl auch entfallen und die Zustimmung kann als gegeben angenommen werden. Wurde die Zustimmung des Nutzers 10 festgestellt, liefert der Webserver 30 dem Nutzer 10 das gewünschte Datenangebot 38 aus.

Die vorgenannten Schritte können anschließend für weitere Datenangebote 36, 38 desselben Leistungsanbieters oder für Datenangebote 36, 38 anderer, auf demselben Netzserver 30 vertretener Leistungsanbieter wiederholt werden.

Stellt der Netzserver 30 nach Anforderung eines gebührenbehafteten Datenangebotes 38 durch den Nutzer 10 fest, daß sich im Webserver 30 keine oder nicht mehr ausreichend auf den Leistungsanbieter ausgestellte Schecks 42 befinden, veranlaßt der Netzserver 30 den Nutzer zur Kontaktierung der Zahlungszentrale 60, um neue Schecks 42 zu erzeugen.

Der Nutzer 10 kontaktiert hierauf unter Angabe der Nutzerkennung 45 die Zahlungszentrale 60. Diese ermittelt zum einen den das Nutzerkonto 72 führenden Kontenbetreiber 92, zum anderen den das Konto 80 des Leistungsanbieters führenden Kontobetreiber 94 und kontaktiert beide. Vom Kontobetreiber 94 fordert sie Informationen zu dem Leistungsanbieter, vom Kontenbetreiber 92 die Zusendung eines Garantiebeleges 85, der die Deckung des Nutzerkontos 72 garantiert. Erstere speichert sie im Segment 86 des Transaktionsspeichers 68, letztere, sofern sie eingeht, im Segment 84.

Liegen der Zahlungszentrale 60 hiernach die von den Kontobetreibern angeforderten Informationen vor, bietet sie dem Nutzer 10 durch Übermittlung einer entsprechenden Maske die Erstellung von auf einen Leistungsanbieter ausgestellten Schecks 42 an und fordert ihn auf, eine Anzahl von in den Scheck 42 aufzunehmenden elektronischen Werteinheiten 40 anzugeben. Gemäß den vom Nutzer 10 mitgeteilten Angaben erstellt die Zahlungszentrale 60 anschließend Scheckoriginale 41, die sie mit der Nutzerkennung 45 sowie einer Scheckkennung 43 versieht und in den Zwischenspeicher 64 legt. Mit den Scheckoriginalen 41 übereinstimmende, jedoch anonymisierte Schecks 42 ohne Nutzerkennung 45 übermittelt sie, nach Rückerhalt der mit der Scheckerstellung an den Nutzer 10, 12 gesandten Transfermarke, an den Netzserver 30, welcher sie in das Werteinheitendepot 54 des Nutzers 10 ablegt.

Nach Eingang der Schecks 42 kehrt der Netzserver 30 zu dem von dem Nutzer 10 ursprünglich angeforderten, gebührenbehafteten Datenangebot 38 zurück, das vorzugsweise in einen Anhang zu der zuvor weitergeleiteten Transfermarke bezeichnet wurde, und nimmt durch Entnahme entsprechender Werteinheiten 40 aus dem Scheck 42 die Bezahlung vor. Optional kann der Bezahlung das Einholen einer aktiven Bestätigung durch den Nutzer 10 vorgeschaltet sein. Anschließend liefert der Netzserver 30 das angeforderte Datenangebot 38 an den Nutzer 10 aus.

Die Schritte zum Erstellen neuer Schecks 42 werden wiederholt, so oft der Nutzer 10 auf ein gebührenbehaftetes Datenangebot 38 eines Leistungsanbieters zugreifen möchte, zu dessen Bezahlung im Webserver 30 nicht in ausreichender Menge von auf dem Leistungsanbieter ausgestellten Schecks 42 vorhanden sind.

Registriert der Netzserver 30 ein Ereignis, das die Abrechnung eines Schecks 42 auslöst, übermittelt er der Zahlungszentrale 60 den Scheck.

Die der Zahlungszentrale 60 vorgelegten Schecks 42 löst diese ein, indem sie zu den mitgeteilten Schecks 42 im Zwischenspeicher 64 befindliche Scheckoriginale 41 ermittelt und, falls diese vorhanden sind, sie die in den Schecks 42 enthaltenen Benutzungsmarken 46 auswertet, um jeweils den einem Leistungsanbieter gutzuschreibenden bzw. einem Nutzer 10 zurückzuerstattenden Geldwert zu ermitteln. Die jeweils ermittelten Beträge meldet sie über das Datennetz 25 an die jeweils das betroffene Konto 72, 80 führenden Kontenbetreiber 92, 94. Diese nehmen schließlich die Buchungen in den betroffenen Konten 72, 80 vor.

Unter Beibehaltung des grundlegenden Konzeptes lassen sich das vorbeschriebene Transaktionssystem und das zugehörige Verfahren in einem weiten Rahmen abwandeln. Dies gilt zunächst für die Strukturen der Netz-Datenverarbeitungsanlage 30 und der Zahlungszentrale 60, die vor allem der besseren Beschreibbarkeit wegen wie beschrieben gewählt wurden. Tatsächlich können etwa die Speichereinrichtungen 34, 50 des Netzservers 30 wie die der Zahlungszentrale 60 auf viele Arten modifiziert und beispielsweise jeweils innerhalb eines einzelnen Speichers oder verteilt auf eine große Zahl von Speichereinrichtungen realisiert werden. Ähnlich können die zentrale Prozessoreinheit 32 und das Kontomodul 44 in integrierter Form oder verteilt auf verschiedene Einrichtungen ausgeführt sein. Generell können die beschriebenen Strukturen jeweils als physische Einheit oder aber verteilt auf eine Mehrzahl von Einheiten ausgebildet sein.

Ferner sind die vorstehend beschriebenen Verfahrensabläufe weitestgehend automatisiert Die Reaktion des Nutzers 10, 12 auf über die Datennetze 20, 22 übermittelte Verfahrensaufforderungen erfolgt zweckmäßig soweit möglich selbsttätig durch die Nutzerschnittstelle 10, 12 ohne Einschaltung der Person des Nutzers; dies gilt beispielsweise für die Schritte 110 oder 148. Die von dem Netzserver 30 bzw. der Zahlungszentrale 60 versandten Aufforderungen sind zweckmäßig als sogenannte redirect messages realisiert.

Keineswegs durchgehend zwingend ist weiter die Reihenfolge der Schrittausführung. Ohne die Funktion des Verfahrens zu beeinträchtigen, können einzelne Schritte auch zu anderen als den beschriebenen Zeitpunkten ausgeführt werden. Sämtliche Datenübertragungen über die Datennetze 20, 22, 24, 25, 26 erfolgen ferner vorzugsweise unter Einsatz geeigneter kryptologischer Sicherungstechniken. Das anhand der Fig. 4 beschriebene Verfahren ist desweiteren nicht auf eine Verwendung in Verbindung mit dem vorstehend beschriebenen Bezahlungsverfahren beschränkt, sondern kann auch in anderen Systemen zur Ausführung völlig anderer Transaktionen eingesetzt werden.

## Patentansprüche

1. Verfahren zum Bezahlen eines Datenangebotes, das auf einer Netzdatenverarbeitungsanlage angeboten wird und von dort über ein Datennetz abrufbar ist, **gekennzeichnet durch** die Schritte:
- Herstellen einer Verbindung von einer Nutzerschnittstelle (10, 12) zu der Netzdatenverarbeitungsanlage (30) über das Datennetz (20),
- Bereitstellen von elektronischen Werteinheiten (40) in einem auf der Netzdatenverarbeitungsanlage (30) geführten Werteinheitendepot (54), wobei die elektronischen Werteinheiten (40) einem von einem Nutzer frei festlegbaren Geldwert entsprechen,
- Versehen einer zur Bezahlung des Datenangebotes notwendigen Zahl von elektronischen Werteinheiten (40) mit einem Benutzungsmarker in der Netzdatenverarbeitungsanlage (30),
- Übermitteln der elektronischen Werteinheiten (40) von der Netzdatenverarbeitungsanlage (30) an eine Zahlungszentrale (60) zur Abrechnung bei Eintritt eines bestimmten Ereignisses.

2. Verfahren nach Anspruch 1, **dadurch gekennzeichnet, daß** die Bereitstellung der elektronischen Werteinheiten (40) nach Eintritt eines vorbestimmten Ereignisses aufgehoben wird.

3. Verfahren nach Anspruch 2, **dadurch gekennzeichnet, daß** die Aufhebung nach Ablauf einer Haltefrist erfolgt.

4. Verfahren nach Anspruch 1, **dadurch gekennzeichnet, daß** die elektronischen Werteinheiten (40) mit einer Anbieterkennung (44) versehen werden, wodurch sie nur zur Bezahlung von Datenangeboten (38) eines bestimmten Leistungsanbieters verwendbar sind.

5. Verfahren nach Anspruch 1, **dadurch gekennzeichnet, daß** die elektronischen Werteinheiten (40) in einer Zahlungszentrale (60) erzeugt werden.

6. Verfahren nach Anspruch 5, **dadurch gekennzeichnet, daß** die Netz-Datenverarbeitungsanlage (30) die Herstellung einer Verbindung zwischen einem Nutzer (10, 12) und der Zahlungszentrale (60) veranlaßt, wenn in der Netz-Datenverarbeitungsanlage (30) nicht in ausreichender Menge elektronische Werteinheiten (40) zur Zahlung eines angeforderten Datenangebotes (38) vorhanden sind.

7. Verfahren nach Anspruch 5, **dadurch gekennzeichnet, daß** die Erzeugung der elektronischen Werteinheiten in der Zahlungszentrale (60) im Dialog mit dem Nutzer (10, 12) erfolgt.

8. Verfahren nach Anspruch 5, **dadurch gekennzeichnet, daß** jeweils eine Mehrzahl von elektronischen Werteinheiten (40) in einem Wertblock (41) zusammengefaßt wird.

9. Verfahren nach Anspruch 5, **dadurch gekennzeichnet, daß** die Zahl der in einem Wertblock (41) zusammengefaßten elektronischen Werteinheiten (40) von einem Nutzer (10, 12) festlegbar ist.

10. Verfahren nach Anspruch 5, **dadurch gekennzeichnet, daß** der Netz-Datenverarbeitungsanlage (30) jeweils ein Doppel (42) von einem in der Zahlungszentrale (60) erzeugten Wertblock (41) übermittelt wird.

11. Verfahren nach Anspruch 5, **dadurch gekennzeichnet, daß** Bereitstellung und Verwaltung von elektronischen Werteinheiten (40) in der Netz-Datenverarbeitungsanlage (30) in Form von Wertblockdoppeln (42) erfolgen.

12. Verfahren nach Anspruch 5, **dadurch gekennzeichnet, daß** die Wertblöcke (41) in der Zahlungszentrale (60) gespeichert werden.

13. Verfahren nach Anspruch 5, **dadurch gekennzeichnet, daß** die Wertblöcke (41) mit einer Nutzerkennung (45) versehen werden, wodurch sie einem Nutzer (10, 12) zugeordnet werden.

14. Verfahren nach Anspruch 5, **dadurch gekennzeichnet, daß** das der Netz-Datenverarbeitungsanlage (30) übermittelte Wertblockdoppel (42) aus dem Wertblock (41) abgeleitet wird, indem es durch Weglassen der Nutzerkennung (45) anonymisiert wird.

15. Verfahren nach Anspruch 5, **dadurch gekennzeichnet, daß** eine Erzeugung von elektronischen Werteinheiten (40) nur vorgenommen wird, wenn ein entsprechende Geldwert auf einem der Zahlungszentrale (60) zugänglichen Konto (72) des Nutzers (10,12) gedeckt wird.

16. Verfahren nach Anspruch 5, **dadurch gekennzeichnet, daß** die Abrechnung benutzter elektronischer Werteinheiten (40) in der Zahlungszentrale (60) erfolgt.

17. Verfahren nach Anspruch 5, **dadurch gekennzeichnet, daß** vor Abrechnung eines übermittelten Wertblockdoppels (42) zunächst das Vorliegen eines zugehörigen Wertblockes (41) geprüft wird.

18. Verfahren nach Anspruch 5, **dadurch gekennzeichnet, daß** der Geldwert elektronischer Werteinheiten (40) bei Erzeugung zunächst dem Konto (72) des Nutzers (10, 12) belastet und der Geldwert der davon nicht für Zahlungen genutzten elektronischen Werteinheiten (40) bei der späteren Abrechnung wieder zurückerstattet wird.

19. Netz-Datenverarbeitungsanlage zum Anbieten eines gebührenbehafteten Datenangebotes in einem Datennetz **dadurch gekennzeichnet, daß**
- sie über Mittel (50) zur Einrichtung eines nutzerspezifischen Werteinheitendepots (54) verfügt, auf das ein Nutzer (10, 12) elektronische Werteinheiten (40) transferieren kann, die einem von einem Nutzer frei festlegbaren Geldwert entsprechen, und mit denen nachfolgend die Bezahlung von gebührenbehafteten Daten angeboten (38) erfolgt, indem eine zur Bezahlung des Datenangebotes notwendige Menge von elektronischen Werteinheiten (40) in dem Werteinheitendepot (54) mit einem Benutzungsmarker versehen wird,
- sie den Eintritt eines bestimmten Ereignisses überwacht, und
- sie die elektronischen Werteinheiten (40) auf den Eintritt eines bestimmten Ereignisses hin an eine Zahlungszentrale (60) übermittelt.

20. Anordnung nach Anspruch 19, **dadurch gekennzeichnet, daß** sie über ein Kontomodul (33) verfügt, welches die Werteinheitendepots (54) verwaltet.

21. Anordnung nach Anspruch 19, **dadurch gekennzeichnet, daß** das Kontomodul (44) elektronische Werteinheiten (40) zeitlich befristet speichert.

22. Anordnung nach Anspruch 19, **dadurch gekennzeichnet, daß** sie über ein Datennetz (24) mit einer Zahlungszentrale (60) verbunden ist.

23. Anordnung nach Anspruch 19, **dadurch gekennzeichnet, daß** die elektronischen Werteinheiten (40) jeweils auf einen bestimmten Leistungsanbieter ausgezeichnet sind.

24. Zahlungszentrale zur Abrechnung von elektronischen Werteinheiten, die ihr über ein Datennetz von einer Netz-Datenverarbeitungsanlage übermittelt werden, **dadurch gekennzeichnet, daß** sie mit
- einem Nutzerkontenbereich (70), in dem Konten (72) von Nutzern (10, 12) geführt werden,
- einem Anbieterkontenbereich (66), in dem Konten (80) von Leistungsanbietem geführt werden,
- sowie Ladeeinrichtungen (90) zur Übertragung von Geldwerten auf die Nutzerkonten (72) verbunden ist, und
- sie einen Zwischenspeicher (64) aufweist, in dem sie eine mit der Anzahl von an eine Netz-Datenverarbeitungsanlage (30) herausgegebenen Werteinheiten (42) übereinstimmende Anzahl von elektronischen Werteinheiten (40) als Doppel hält, bis ihr die an die Netz-Datenverarbeitungsanlage (30) herausgegebenen Werteinheiten (42) rückübermittelt werden, die, soweit sie zur Bezahlung von Datenangeboten genutzt wurden, in der Netz-Datenverarbeitungsanlage (36) mit Benutzungsmarkern (46) versehen worden sind, woraufhin sie die Benutzungsmarker (46) auswertet, um die Zahl der unbenutzten elektronischen Werteinheiten (40) zu bestimmen, und die im Zwischenspeicher (64) als Doppel gehaltenen Werteinheiten (40) durch Gutschrift auf ein Konto (80) eines Leistungsanbieters oder Rückerstattung auf ein Konto (72) eines Nutzers (10, 12) abrechnet.

25. Zahlungszentrale nach Anspruch 24, **dadurch gekennzeichnet, daß** zumindest eine Teil der Nutzerkonten (72) und/ oder der Anbieterkonten (80) bei einem oder mehreren externen Kontenbetreibern (92, 94) geführt werden.

26. Transaktionssystem zur Durchführung eines Verfahrens gemäß Anspruch 1, beinhaltend eine Netz-Datenverarbeitungsanlage (30) gemäß Anspruch 19 sowie eine Zahlungszentrale (60) gemäß Anspruch 24.

## Claims

1. A method for paying for a data offer which is offered on a network data processing system and is retrievable from there over a data network, **characterized by** the steps of:
- establishing a connection from a user interface (10, 12) to the network data processing system (30) over the data network (20),
- making available electronic value units (40) in a value-unit deposit (54) kept on the network data processing system (30), the electronic value units (40) corresponding to a money value freely specifiable by a user,
- providing a number of electronic value units (40) necessary for payment of the data offer with a usage marker in the network data processing system (30),
- transmitting the electronic value units (40) from the network data processing system (30) to a payment center (60) for settlement upon occurrence of a certain event.

2. The method according to claim 1, **characterized in that** the making available of electronic value units (40) is suspended after occurrence of a predetermined event.

3. The method according to claim 2, **characterized in that** the suspension is effected after expiry of a holding period.

4. The method according to claim 1, **characterized in that** the electronic value units (40) are provided with a provider identification (44), making them usable only for payment of data offers (38) from a certain service provider.

5. The method according to claim 1, **characterized in that** the electronic value units (40) are generated in a payment center (60).

6. The method according to claim 5, **characterized in that** the network data processing system (30) initiates the establishment of a connection between a user (10, 12) and the payment center (60) when an insufficient amount of electronic value units (40) for payment of a requested data offer (38) is present in the network data processing system (30).

7. The method according to claim 5, **characterized in that** the generation of electronic value units in the payment center (60) is effected in a dialog with the user (10, 12).

8. The method according to claim 5, **characterized in that** a plurality of electronic value units (40) are combined in a value block (41) in each case.

9. The method according to claim 5, **characterized in that** the number of electronic value units (40) combined in a value block (41) is specifiable by a user (10, 12).

10. The method according to claim 5, **characterized in that** a duplicate (42) of a value block (41) generated in the payment center (60) is transmitted to the network data processing system (30) in each case.

11. The method according to claim 5, **characterized in that** the making available and management of electronic value units (40) in the network data processing system (30) are effected in the form of value-block duplicates (42).

12. The method according to claim 5, **characterized in that** the value blocks (41) are stored in the payment center (60).

13. The method according to claim 5, **characterized in that** the value blocks (41) are provided with a user identification (45), thereby associating them with a user (10, 12).

14. The method according to claim 5, **characterized in that** the value-block duplicate (42) transmitted to the network data processing system (30) is derived from the value block (41) by being anonymized by omission of the user identification (45).

15. The method according to claim 5, **characterized in that** a generation of electronic value units (40) is only carried out when a corresponding money value is available in an account (72) of the user (10, 12) that is accessible to the payment center (60).

16. The method according to claim 5, **characterized in that** the settlement of used electronic value units (40) is effected in the payment center (60).

17. The method according to claim 5, **characterized in that** before settlement of a transmitted value-block duplicate (42) the presence of an associated value block (41) is first checked.

18. The method according to claim 5, **characterized in that** the money value of electronic value units (40) is, upon generation, first debited to the account (72) of the user (10, 12), and the money value of the electronic value units (40) thereof not used for payments is refunded again upon later settlement.

19. A network data processing system for offering a chargeable data offer in a data network, **characterized in that**
- it has means (50) for setting up a user-specific value-unit deposit (54) to which a user (10, 12) can transfer electronic value units (40) which correspond to a money value freely specifiable by a user, and with which the payment of chargeable data offers (38) is subsequently effected by an amount of electronic value units (40) necessary for payment of the data offer being provided with a usage marker in the value-unit deposit (54),
- it monitors the occurrence of a certain event, and
- it transmits the electronic value units (40) to a payment center (60) following the occurrence of a certain event.

20. The arrangement according to claim 19, **characterized in that** it has an account module (33) which manages the value-unit deposits (54).

21. The arrangement according to claim 19, **characterized in that** the account module (44) stores electronic value units (40) for a limited time.

22. The arrangement according to claim 19, **characterized in that** it is connected to a payment center (60) over a data network (24).

23. The arrangement according to claim 19, **characterized in that** the electronic value units (40) are tagged for a certain service provider in each case.

24. A payment center for settling electronic value units which are transmitted thereto over a data network by a network data processing system, **characterized in that** it is connected to
- a user account area (70) in which accounts (72) of users (10, 12) are kept,
- a provider account area (66) in which accounts (80) of service providers are kept,
- and loading devices (90) for transmitting money values to the user accounts (72), and
- it has a temporary store (64) in which it holds, as duplicates, a number of electronic value units (40) matching the number of value units (42) issued to a network data processing system (30), until there are retransmitted thereto the value units (42) issued to the network data processing system (30) that have been provided with usage markers (46) in the network data processing system (36) insofar as they have been used for payment of data offers, whereupon it evaluates the usage markers (46) to determine the number of unused electronic value units (40), and settles the value units (40) held as duplicates in the temporary store (64) by credit to an account (80) of a service provider or refund to an account (72) of a user (10, 12).

25. The payment center according to claim 24, **characterized in that** at least a portion of the user accounts (72) and/or of the provider accounts (80) are kept with one or more external account operators (92, 94).

26. A transaction system for carrying out a method according to claim 1, comprising a network data processing system (30) according to claim 19 and a payment center (60) according to claim 24.

## Revendications

1. Procédé de paiement d'une offre de données offerte sur une installation de traitement de données en réseau et accessible à partir de cette dernière par un réseau de données, **caractérisé par** les étapes :
■ établissement d'une connexion d'une interface d'un usager (10, 12) à l'installation de traitement de données en réseau (30) par l'intermédiaire du réseau de données (20),
■ mise à disposition d'unités de valeur électroniques (40) dans un dépôt d'unités de valeur (54) entretenu sur l'installation de traitement de données en réseau (30), les unités de valeur électroniques (40) correspondant à une valeur monétaire pouvant être fixée librement par un usager,
■ application, au sein de l'installation de traitement de données en réseau (30), d'un marqueur d'utilisation sur un nombre d'unités de valeur électroniques (40) nécessaire au paiement de l'offre de données,
■ transmission des unités de valeur électroniques (40) de l'installation de traitement de données en réseau (30) à une centrale de paiement (60) pour le décompte lors de la survenance d'un événement déterminé.

2. Procédé selon la revendication 1, **caractérisé en ce que** la mise à disposition des unités de valeur électroniques (40) est suspendue après survenance d'un événement prédéterminé.

3. Procédé selon la revendication 2, **caractérisé en ce que** la suspension a lieu après écoulement d'un délai d'arrêt.

4. Procédé selon la revendication 1, **caractérisé en ce que** les unités de valeur électroniques (40) sont pourvues d'un marqueur de fournisseur (44), ce qui les rend utilisables seulement pour le paiement d'offres de données (38) d'un fournisseur de prestations précis.

5. Procédé selon la revendication 1, **caractérisé en ce que** les unités de valeur électroniques (40) sont générées dans une centrale de paiement (60).

6. Procédé selon la revendication 5, **caractérisé en ce que,** quand il n'y a pas un nombre suffisant d'unités de valeur électroniques (40) dans l'installation de traitement de données en réseau (30) pour le paiement d'une offre de données (38) demandée, l'installation de traitement de données en réseau (30) provoque l'établissement d'une connexion entre un usager (10, 12) et la centrale de paiement (60).

7. Procédé selon la revendication 5, **caractérisé en ce que** la production des unités de valeur électroniques dans la centrale de paiement (60) a lieu dans le cadre d'un dialogue avec l'usager (10, 12).

8. Procédé selon la revendication 5, **caractérisé en ce que** les unités de valeur électroniques (40) sont groupées respectivement à plusieurs dans un bloc de valeur (41).

9. Procédé selon la revendication 5, **caractérisé en ce que** le nombre d'unités de valeur électroniques (40) groupées dans un bloc de valeur (41) peut être fixé par un usager (10, 12).

10. Procédé selon la revendication 5, **caractérisé en ce que** respectivement un double (42) d'un bloc de valeur (41) généré dans la centrale de paiement (60) est transmis à l'installation de traitement de données en réseau (30).

11. Procédé selon la revendication 5, **caractérisé en ce que** la mise à disposition et la gestion d'unités de valeur électroniques (40) dans l'installation de traitement de données en réseau (30) a lieu sous forme de doubles de bloc de valeur (42).

12. Procédé selon la revendication 5, **caractérisé en ce que** les blocs de valeur (41) sont mémorisés dans la centrale de paiement (60).

13. Procédé selon la revendication 5, **caractérisé en ce que** les blocs de valeur (41) sont pourvus d'un marqueur d'usager (45), ce par quoi ils sont affectés à un usager (10, 12).

14. Procédé selon la revendication 5, **caractérisé en ce que** le double de bloc de valeur (42) transmis à l'installation de traitement de données en réseau (30) est dérivé du bloc de valeur (41) **en ce qu'**il est rendu anonyme par omission du marqueur d'usager (45).

15. Procédé selon la revendication 5, **caractérisé en ce qu'**une production d'unités de valeur électroniques (40) n'est effectuée que quand une valeur monétaire correspondante est couverte sur un compte (72) de l'usager (10, 12) accessible à la centrale de paiement (60).

16. Procédé selon la revendication 5, **caractérisé en ce que** de décompte d'unités de valeur électroniques (40) utilisées a lieu dans la centrale de paiement (60).

17. Procédé selon la revendication 5, **caractérisé en ce que** la présence d'un bloc de valeur (41) correspondant est tout d'abord vérifiée avant décompte d'un double de bloc de valeur (42) transmis.

18. Procédé selon la revendication 5, **caractérisé en ce que,** lors de la production, la valeur monétaire d'unités de valeur électroniques (40) est tout d'abord débitée du compte (72) de l'usager (10, 12), et **en ce que** la valeur monétaire des unités de valeur électroniques (40) qui, parmi celles qui furent produites, n'ont pas été utilisées pour des paiements, est remboursée à nouveau lors du décompte ultérieur.

19. Installation de traitement de données en réseau (30) destinée à offrir une offre de données liée au paiement de redevances dans un réseau de données,
**caractérisée en ce que**
■ elle dispose de moyens (50) d'établissement d'un dépôt d'unités de valeur (54) propre à l'usager, dépôt sur lequel un usager (10, 12) peut transférer des unités de valeur électroniques (40) qui correspondent à une valeur monétaire pouvant être fixée librement par un usager et au moyen desquelles le paiement d'offres de données (38) a ensuite lieu **en ce qu'**un nombre d'unités de valeur électroniques (40) nécessaire au paiement de l'offre de données est pourvu d'un marqueur d'utilisation dans le dépôt d'unités de valeur (54),
■ elle surveille la survenance d'un événement déterminé, et
■ à la suite de la survenance d'un événement déterminé, elle transmet les unités de valeur électroniques (40) à une centrale de paiement (60).

20. Disposition selon la revendication 19, **caractérisée en ce qu'**elle dispose d'un module de compte (33) qui gère les dépôts d'unités de valeur (54).

21. Disposition selon la revendication 19, **caractérisée en ce que** le module de compte (44) mémorise des unités de valeur électroniques (40) sur une durée limitée.

22. Disposition selon la revendication 19, **caractérisée en ce qu'**elle est connectée avec une centrale de paiement (60) par l'intermédiaire d'un réseau de données (24).

23. Disposition selon la revendication 19, **caractérisée en ce que** les unités de valeur électroniques (40) sont respectivement marquées en fonction d'un fournisseur de prestations précis.

24. Centrale de paiement destinée au décompte d'unités de valeur électroniques qui lui sont transmises par une installation de traitement de données en réseau par l'intermédiaire d'un réseau de données, **caractérisée en ce qu'**elle est connectée avec
■ une zone de comptes d'usagers (70) dans laquelle des comptes (72) d'usagers (10, 12) sont entretenus,
■ une zone de comptes de fournisseurs (66) dans laquelle des comptes (80) de fournisseurs de prestations sont entretenus,
■ ainsi qu'avec des dispositifs de chargement (90) destinés à la transmission de valeurs monétaires sur les comptes d'usagers (72), et **en ce que**
■ elle comporte une mémoire tampon (64) dans laquelle elle garde en tant que doubles un nombre d'unités de valeur électroniques (40) correspondant au nombre d'unités de valeur (42) communiqué à une installation de traitement de données en réseau (30), jusqu'à ce que les unités de valeur (42) qui furent communiquées à l'installation de traitement de données en réseau (30) et qui, dans la mesure où elles furent utilisées pour le paiement d'offres de données, ont été pourvues de marqueurs d'utilisation (46) dans l'installation de traitement de données en réseau (36), lui soient retransmises, à la suite de quoi elle dépouille les marqueurs d'utilisation (46) afin de déterminer le nombre d'unités de valeur électroniques (40) inutilisées et fait le décompte des unités de valeur (40) gardées en tant que doubles dans la mémoire tampon (64) en établissant un avoir sur un compte (80) d'un fournisseur de prestations ou bien en effectuant un remboursement sur un compte (72) d'un usager (10, 12).

25. Centrale de paiement selon la revendication 24, **caractérisée en ce qu'**au moins une partie des comptes d'usagers (72) et / ou des compte de fournisseurs (80) sont entretenus chez un ou plusieurs exploitants externes de comptes (92, 94).

26. Système de transaction destiné à l'exécution d'un procédé selon la revendication 1, comprenant une installation de traitement de données en réseau (30) selon la revendication 19 ainsi qu'une centrale de paiement (60) selon la revendication 24.
